# FASCICULE DE BREVET EUROPEEN

(11) **EP 0 655 188 B1**
(45) Date de publication et mention de la délivrance du brevet: **26.08.1998**
(21) Numéro de dépôt: 94440077.9
(22) Date de dépôt: 23.11.1994
(51) Int. Cl.: A01D 78/10, A01D 75/20

(54) **Machine de fenaison**
Heuwerbungsmaschine
Hay making machine

(30) Priorité: 25.11.1993 FR 9314278
(43) Date de publication de la demande: 31.05.1995
(73) Titulaire: KUHN S.A., F-67700 Saverne (FR)
(72) Inventeur: Aron, Jérôme, F-67330 Dossenheim Sur Zinsel (FR)
(74) Mandataire: Andres, Jean-Claude

(56) Documents cités:
- EP-A- 0 345 183
- EP-A- 0 390 087
- EP-A- 0 456 330
- EP-A- 0 558 430
- DE-A- 2 018 110
- DE-C- 3 926 381
- FR-A- 1 571 078
- FR-A- 2 093 488
- FR-A- 2 425 192
- GB-A- 1 009 901

## Description

La présente invention se rapporte à une machine de fenaison pour l'andainage de fourrage, comportant un bâti qui supporte au moins un rotor, lequel rotor possède un boîtier monté au moyen de roulements sur un axe support sensiblement vertical et immobile en rotation, ledit boîtier portant des bras porte-outils qui peuvent tourner sur eux-mêmes et qui sont commandés au moyen d'une came immobile, ce boîtier étant entraîné en rotation durant le travail autour de l'axe support.

Sur des machines connues, l'entraînement en rotation du boîtier du rotor est assuré au moyen d'une roue dentée conique. Celle-ci engrène avec un pignon conique qui est monté sur un arbre d'entraînement formant un angle droit avec l'axe support du boîtier. Dans ce mode de réalisation, l'engrènement des dents de ladite roue avec celles du pignon doit être réglé avec une grande précision. Pour obtenir cette précision, il faut utiliser des cales de positionnement qui sont fastidieuses à mettre en place.

Par ailleurs, comme le rotor est très sollicité lorsque la machine passe sur des dénivellations durant le travail, les pièces composant le boîtier sont soumises à d'importantes secousses. Il s'en suit une usure des pièces qui portent ledit boîtier, ce qui entraîne un léger affaissement de ce dernier sur l'axe support. La roue dentée qui est solidaire du boîtier s'écarte alors du pignon. De ce fait, l'engrènement de leurs dents n'est plus correctement assuré et les dents peuvent rapidement se détériorer.

Le même défaut d'engrènement se produit lorsque l'inclinaison de l'axe support lui-même varie à la suite des chocs subis par la machine.

La présente invention a pour but de remédier à ces inconvénients. Elle doit notamment faciliter le montage des organes d'entraînement du rotor et éviter une rapide détérioration de ces organes.

A cet effet, une importante caractéristique de l'invention consiste en ce que le boîtier comporte en vue de son entraînement une roue dentée cylindrique qui est fixée sur un moyeu du boîtier et qui se situe sous un carter solidaire du bâti, laquelle roue dentée cylindrique engrène avec une seconde roue dentée cylindrique qui est disposée sur un arbre moteur sensiblement parallèle à l'axe support du boîtier.

En raison de ces roues cylindriques, la roue qui est solidaire du boîtier peut être légèrement décalée par rapport à la seconde roue dentée qui est solidaire de l'arbre moteur, sans que cela ait des conséquences néfastes. Il n'est donc pas nécessaire de les positionner d'une manière très précise avec des cales.

Une autre caractéristique de l'invention consiste en ce que l'arbre moteur comporte en sus au moins une roue dentée conique qui engrène avec une seconde roue dentée conique disposée sur un arbre d'entraînement sensiblement horizontal. Il est ainsi possible d'entraîner le boîtier d'une manière optimale depuis l'arbre de prise de force du tracteur utilisé pour déplacer la machine. De cette manière, on peut également facilement obtenir la bonne vitesse de rotation du rotor, vu que celle-ci doit être inférieure à la vitesse de rotation de l'arbre de prise de force. Une première réduction est obtenue au moyen de l'engrenage à roues coniques et une deuxième réduction est obtenue au moyen de l'engrenage à roues cylindriques. Le couple à transmettre par chacun de ces engrenages est ainsi relativement faible.

Une autre caractéristique de l'invention consiste en ce que l'arbre d'entraînement, l'arbre moteur, les roues dentées coniques et la seconde roue dentée cylindrique sont liés au carter solidaire du bâti. Celui-ci constitue un ensemble équipé de l'essentiel des organes d'entraînement. Il peut ainsi être prémonté et peut ensuite être facilement mis en place lors de l'assemblage de la machine.

Les moyens d'entraînement en rotation du rotor peuvent comporter un crabot permettant d'inverser le sens de rotation du rotor et/ou d'interrompre la rotation dudit rotor.

Selon une autre caractéristique de l'invention, l'arbre moteur est lié à un moteur hydraulique. Dans ce cas, l'entraînement en rotation du rotor peut être assuré avec peu de pièces. En sus, celles-ci sont relativement simples.

D'autres caractéristiques et avantages de l'invention ressortiront des revendications et de la description ci-après de plusieurs exemples de réalisation non limitatifs de l'invention, avec référence aux dessins annexés dans lesquels :
- La figure 1 représente une vue de dessus d'une machine selon l'invention ;
- La figure 2 représente, à plus grande échelle, une coupe du rotor ;
- La figure 3 représente une coupe d'un rotor selon un deuxième exemple de réalisation ;
- La figure 4 représente une vue de dessus d'une machine selon un troisième exemple de réalisation ;
- La figure 5 représente une coupe du rotor selon l'exemple de la figure 4, en position de travail ;
- La figure 6 représente une coupe analogue à celle de la figure 5, le rotor étant en position de transport ;
- La figure 7 représente une coupe d'un rotor selon un quatrième exemple de réalisation ;
- La figure 8 représente une coupe d'un rotor selon un cinquième exemple de réalisation.

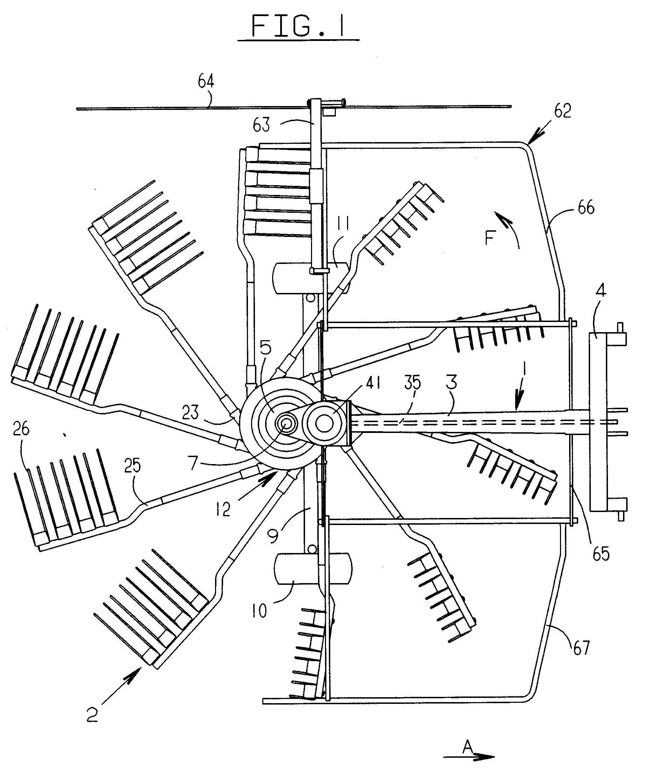

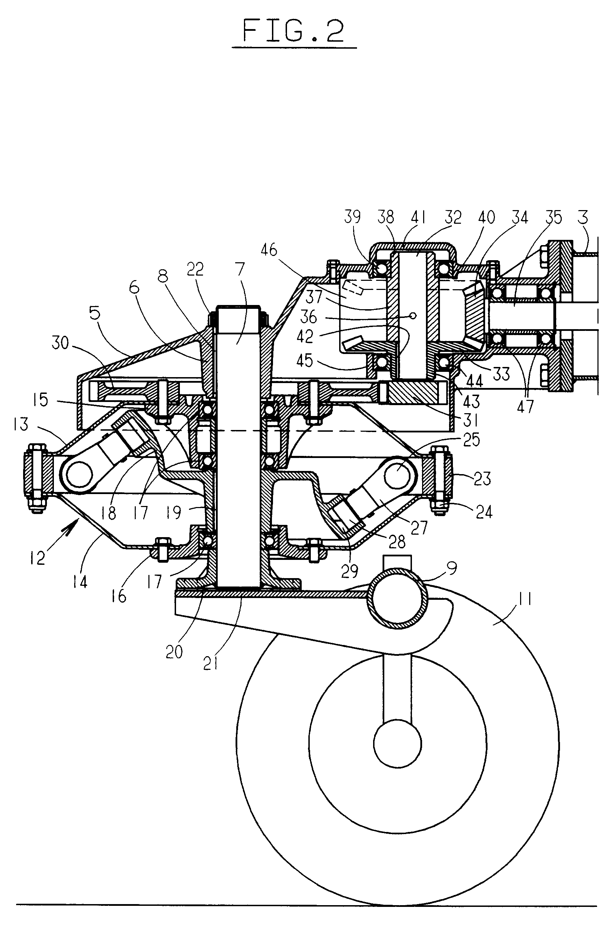

Telle qu'elle est représentée sur les figures 1 et 2, la machine de fenaison selon l'invention comporte un bâti (1) qui porte au moins un rotor d'andainage (2). Ledit bâti (1) est constitué par une poutre principale (3) qui est dirigée dans la direction d'avancement (A) et qui est munie à son extrémité la plus en avant d'un chevalet d'attelage trois points (4). Celui-ci permet l'accouplement de la machine à un tracteur d'entraînement non représenté. L'autre extrémité de cette poutre (3) porte un carter (5) qui est ouvert vers le bas. Ce carter (5) comporte un palier (6) dans lequel est logé un axe support (7) qui est immobilisé en rotation par une clavette (8). Cet axe (7) est dirigé sensiblement verticalement vers le bas et porte à son extrémité inférieure une traverse (9) avec deux roulettes (10, 11) qui peuvent prendre appui sur le sol.

Le rotor (2) est monté sur l'axe (7) sous le carter (5). Il possède un boîtier rotatif (12) composé de deux assiettes (13 et 14) dont l'une est fixée sur un moyeu (15) et l'autre sur un palier (16). Ce moyeu (15) et ce palier (16) sont montés sur l'axe support (7) au moyen de roulements à billes (17). Entre ces deux pièces (15 et 16) est disposée une came de commande (18) qui est immobilisée sur l'axe support (7) avec une clavette (19). A la partie inférieure de cet axe support (7) est soudée une semelle (20) qui est elle-même liée à une plaque (21) solidaire de la traverse (9) avec les roulettes (10 et 11). La semelle (20) bloque en direction du bas toutes les pièces qui sont montées sur l'axe support (7). A l'extrémité supérieure de ce dernier est prévu un filetage sur lequel est vissé un écrou de serrage (22).

Des paliers (23) sont fixés au moyen de boulons (24) entre les bords extérieurs des assiettes (13 et 14). Dans ces paliers (23) sont logés des bras (25) qui peuvent tourner sur eux-mêmes. Ils s'étendent vers l'extérieur et portent des fourches de râtelage (26) à leurs extrémités. Chacun de ces bras (25) possède à son extrémité qui est située à l'intérieur du boîtier (12) un levier (27) avec un galet (28) qui se situe dans une gorge (29) de la came de commande (18).

Sur le moyeu (15) est également fixée une roue dentée cylindrique (30). Celle-ci est entièrement située sous le carter (5) de manière à être protégée. Cette roue dentée (30) engrène avec une seconde roue dentée cylindrique (31) qui est fixée sur l'extrémité inférieure d'un arbre moteur (32) sensiblement parallèle à l'axe support (7) du boîtier (12). Cette seconde roue dentée (31) est également située sous le carter (5). Son nombre de dents est environ cinq fois inférieur à celui de la roue dentée (30) de manière à obtenir une réduction du même ordre de grandeur de la vitesse de rotation de cette dernière et du boîtier (12). L'arbre moteur (32) comporte en sus une roue dentée conique (33) qui engrène avec une seconde roue dentée conique (34). Celle-ci est fixée sur un arbre d'entraînement (35) qui est sensiblement horizontal et qui est guidé au moyen de roulements à billes (47) dans le carter (5). Cet arbre (35) est dirigé vers le tracteur et est destiné à être relié à l'arbre de prise de force dudit tracteur, d'une manière connue, à l'aide d'un arbre de transmission. Le nombre de dents de la roue dentée (34) qui est solidaire de l'arbre d'entraînement (35) est sensiblement égal à la moitié du nombre de dents de la roue dentée (33) de l'arbre moteur (32). De cette manière, la vitesse de rotation de l'arbre moteur (32) est réduite de moitié par rapport à la vitesse de rotation de l'arbre d'entraînement (35) qui correspond à celle de l'arbre de prise de force du tracteur, c'est-à-dire 540 t/mn. L'agencement décrit ci-dessus permet d'obtenir l'entraînement en rotation du rotor (2) d'une manière optimale.

L'arbre moteur (32) précité est rendu solidaire au moyen d'une goupille (36) d'un tube (37) qui s'étend sur une partie de sa longueur. Ce tube (37) comporte un épaulement (38) sur lequel est monté un roulement à billes (39) qui est par ailleurs logé dans un alésage (40) prévu dans un couvercle (41). Celui-ci est vissé sur la partie supérieure du carter (5). Il est démontable et permet notamment d'accéder à l'intérieur du carter (5). La roue dentée conique (33) est liée à l'arbre moteur (32) au moyen d'une clavette (42). Elle comporte un épaulement (43). Sur cet épaulement (43) est monté un roulement à billes (44) qui est en sus logé dans un palier (45) du carter (5). Le roulement (44) et le palier (45) se situent au-dessus de la roue dentée cylindrique (31). On comprendra que les deux roulements à billes (39 et 44) assurent le guidage en rotation de l'arbre moteur (32).

Le diamètre extérieur de l'épaulement (38) du tube (37) et le diamètre extérieur de l'épaulement (43) de la roue dentée conique (33) sont sensiblement égaux. Il est ainsi possible d'inverser la position dudit tube (37) et de ladite roue dentée (33) sur l'arbre moteur (32). Cette roue dentée (33) occupe alors la position représentée en traits interrompus sur la figure 2, ce qui permet d'inverser le sens de rotation du rotor (2).

Dans l'exemple représenté, l'arbre moteur (32) et les roues dentées coniques (33 et 34) se situent dans une cavité (46) du carter (5). Selon un autre exemple de réalisation, non représenté, ils peuvent être logés dans un carter indépendant ayant une forme générale analogue à celle de la cavité (46) précitée et qui est fixé sur le carter (5). Chacun de ces deux carters est plus simple à réaliser.

Comme cela ressort de la figure 1, le rotor (2) est partiellement entouré d'un dispositif de protection (62) réalisé en une partie centrale (65) et deux parties latérales (66 et 67) repliables. Ce dispositif (62) porte par ailleurs un bras (63) avec un déflecteur (64) qui s'étend latéralement au rotor (2). La position de ce déflecteur (64) par rapport au rotor (2) est de préférence réglable. Le dispositif de protection (62) s'étend au moins sur la moitié avant du rotor (2). Ses parties latérales (66 et 67) peuvent cependant être prolongées vers l'arrière afin d'améliorer la protection.

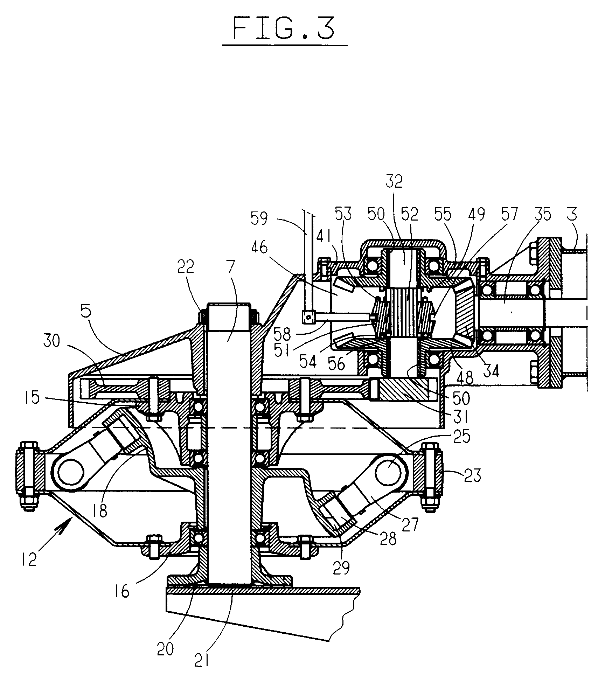

L'exemple de réalisation selon la figure 3 comporte de nombreuses pièces communes avec l'exemple de la figure 2. Ces pièces ne seront plus décrites en détail, mais seront désignées par les mêmes repères. Dans cet exemple, l'arbre moteur (32) porte deux roues dentées coniques (48 et 49) qui engrènent avec la seconde roue dentée (34) solidaire de l'arbre d'entraînement (35). Ces deux roues dentées (48 et 49) ont le même nombre de dents que la roue dentée (33) de l'exemple précédent. Elles sont montées libres en rotation sur des bagues (50) qui sont engagées sur l'arbre moteur (32). La partie de cet arbre moteur (32) qui est située entre les deux roues dentées (48 et 49) est cannelée et porte un crabot (51). Celui-ci peut être déplacé longitudinalement sur ledit arbre (32) mais est lié en rotation avec ce dernier par l'intermédiaire des cannelures (52). Il comporte sur chacun de ses flancs des dents (53 et 54). Celles-ci peuvent engrener avec des dents (55 et 56) complémentaires prévues sur les faces des roues dentées (48 et 49) qui sont orientées vers le crabot (51). Ce crabot (51) assure alors la liaison entre l'arbre moteur (32) et l'une ou l'autre des roues dentées (48 et 49) en vue de la transmission du mouvement d'entraînement. Cette transmission est interrompue lorsque le crabot (51) se situe à égale distance des deux roues dentées (48 et 49). Le crabot (51) comporte en sus une gorge (57) dans laquelle entre une fourche (58) qui permet de le déplacer sur l'arbre moteur (32). Cette fourche (58) est liée à une tige (59) qui s'étend hors du carter (5). Il est ainsi déplaçable depuis l'extérieur.

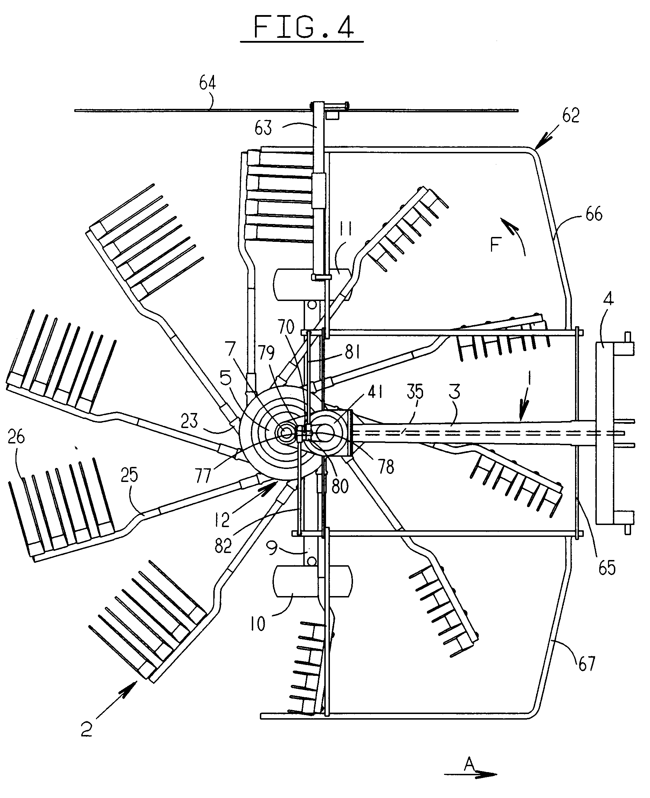

Dans l'exemple selon les figures 4 à 6, l'arbre moteur (32) porte une roue dentée conique (48) qui engrène avec une seconde roue dentée conique (34) de l'arbre d'entraînement (35). Cette roue dentée (48) est montée libre en rotation sur une bague (50) qui est engagée sur l'arbre moteur (32). Ce dernier comporte, au-dessus de la bague (50), des cannelures (52) sur lesquelles est monté un crabot (68). Celui-ci est déplaçable longitudinalement sur les cannelures (52) au moyen d'une fourche (69) et d'une tige (70). Il possède sur son flanc dirigé vers la roue dentée (48) des dents (71) qui peuvent engrener avec des dents (72) prévues sur le flanc de ladite roue dentée (48) en vue de la transmission du mouvement d'entraînement entre la roue dentée (48) et l'arbre moteur (32).

Par ailleurs, le crabot (68) comporte sur son autre flanc une partie conique (73) avec une garniture (74) pour le freinage. Cette partie conique (73) se situe dans un logement (75) de même forme prévu dans le couvercle (41). Dans ledit logement est en sus disposé un ressort (76) qui pousse le crabot (68) en direction de la roue dentée (48).

La tige (70) dépasse de la partie supérieure du carter (5). Elle comporte à son extrémité qui s'étend hors du carter (5) des saillies latérales (77 et 78). Celles-ci se situent au-dessus de rampes (79 et 80) qui sont solidaires de tringles (81 et 82) dont chacune est reliée à l'une des parties latérales (66 et 67) du dispositif de protection (62). Ces parties latérales déplacent ainsi lesdites tringles (81 et 82) lorsqu'elles sont elles-mêmes déplacées par rapport à la partie centrale (65). Les rampes (79 et 80) de ces tringles (81 et 82) sont agencées de telle sorte qu'elles poussent les saillies (77 et 78) et la tige (70) vers le haut lorsqu'elles sont déplacées l'une vers l'autre dans un plan horizontal.

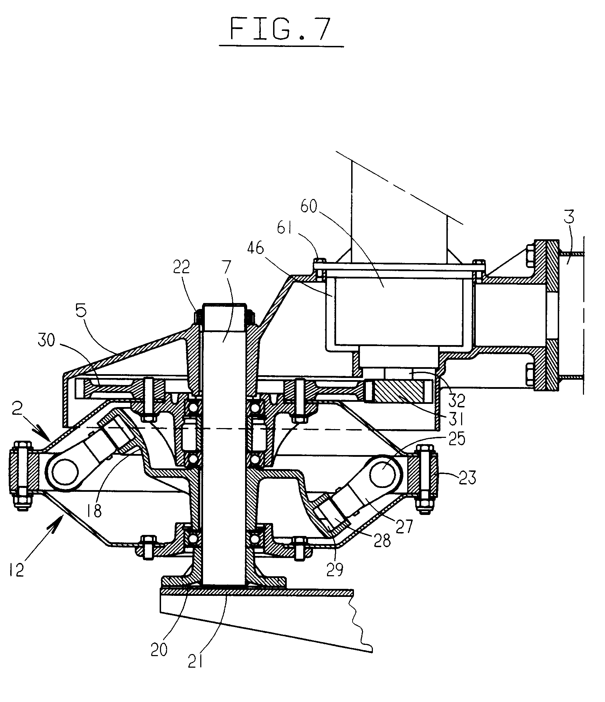

Dans l'exemple selon la figure 7, les pièces similaires à celles des exemples précédents ne seront plus décrites en détail. Ces pièces conservent cependant les mêmes repères. L'arbre moteur (32) est lié à un moteur d'entraînement hydraulique (60). Celui-ci est relié au circuit hydraulique du tracteur au moyen de conduits non représentés. Il est fixé sur le carter (5) au moyen de vis (61) et se situe entre l'axe support (7) du rotor (2) et la poutre (3) du bâti (1). Ce moteur hydraulique (60) assure I'entraînement en rotation du rotor (2) par l'intermédiaire des roues dentées (30 et 31). L'utilisation d'un tel moteur d'entraînement (60) permet de supprimer plusieurs organes de transmission mécaniques qui sont nécessaires dans le cas d'un entraînement à partir de l'arbre de prise de force du tracteur.

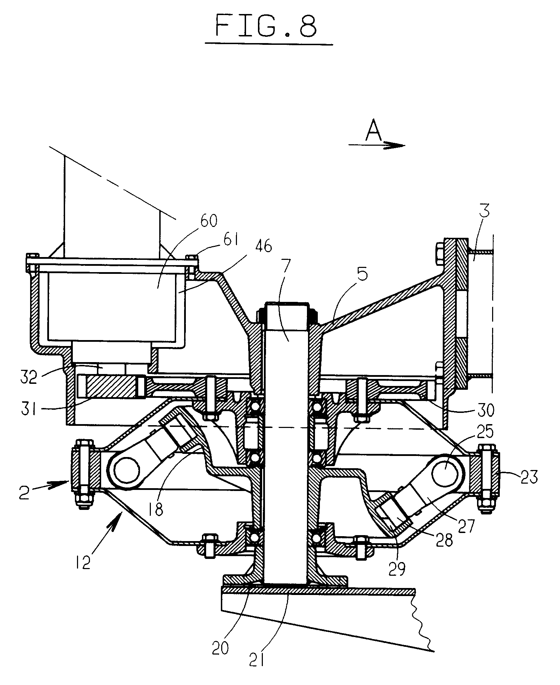

Dans l'exemple de réalisation selon la figure 8, le moteur hydraulique (60) est placé non pas entre l'axe support (7) du rotor (2) et la poutre (3) du bâti (1), mais à l'arrière dudit axe support (7) (vu dans la direction d'avancement (A)). Cette disposition permet une simplification du carter (5).

Selon un autre exemple de réalisation non représenté, le moteur d'entraînement du rotor (2) est un moteur électrique. Ce moteur est monté sur la machine de la même manière que le moteur hydraulique (60). L'emploi d'un moteur électrique confère les mêmes avantages que l'emploi d'un moteur hydraulique (60).

Au travail, la machine est accouplée au moyen du chevalet d'attelage (4) au dispositif de relevage d'un tracteur permettant de la déplacer dans la direction d'avancement (A). Les roulettes (10 et 11) roulent alors sur le sol. Le rotor (2) est entraîné en rotation dans le sens (F) autour de l'axe support (7). Par suite de cette rotation, les galets (28) se déplacent dans la gorge (29) de la came (18). Celle-ci guide alors ces galets (28) de telle sorte qu'ils fassent pivoter les bras (25) sur eux-mêmes au moyen des leviers (27). La position de la came (18) est réglée de manière à ce que les fourches (26) des bras (25) soient dirigées vers le sol dans la partie avant de leur trajectoire et qu'elles se déplacent vers le haut dans la partie latérale de leur trajectoire dans laquelle les bras (25) se dirigent vers l'arrière par rapport à la direction d'avancement (A). Dans ladite partie avant de leur trajectoire, les fourches (26) ramassent le fourrage sur le sol. Ensuite, elles le déplacent latéralement et le déposent sous la forme d'un andain en raison de leur pivotement vers le haut. Le déplacement latéral du fourrage est limité par le déflecteur (64).

Dans l'exemple de réalisation selon les figures 1 et 2, l'entraînement en rotation du rotor (2) est assuré à partir de l'arbre de prise de force du tracteur. L'arbre d'entraînement (35) est relié audit arbre de prise de force par un arbre de transmission intermédiaire. La seconde roue dentée (34) entraîne l'arbre moteur (32) à travers la roue dentée (33) avec laquelle elle engrène. Cet arbre moteur (32) entraîne directement le rotor (2) par l'intermédiaire de deux roues dentées cylindriques (31 et 30).

Au cas où le sens de rotation du rotor (2) devait être modifié, il suffirait d'inverser la position du tube (37) et de la roue dentée conique (33) afin d'amener cette dernière dans la position représentée en traits interrompus. L'arbre moteur (32) et le rotor (2) seraient alors entraînés dans le sens contraire.

Dans l'exemple de réalisation selon la figure 3, la roue dentée (34) de l'arbre d'entraînement (35) fait tourner les deux roues dentées (48 et 49) en sens contraire. Le crabot (51) engrène alors avec l'une des deux roues dentées (48 et 49) et entraîne l'arbre moteur (32) en rotation. Ce dernier entraîne à son tour le rotor (2) à travers les deux roues dentées cylindriques (31 et 30). Dans ce cas, l'inversion du sens de rotation du rotor (2) est obtenue par un simple déplacement du crabot (51) au moyen de la fourche (58) et de la tige (59) afin de le faire engrener avec la deuxième roue dentée (48 ou 49) de l'arbre moteur (32).

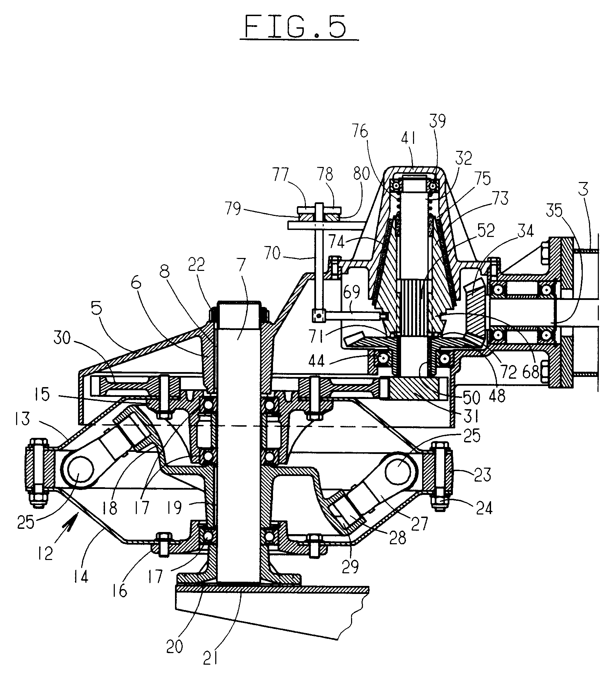

Dans l'exemple de réalisation selon les figures 4 à 6, la roue dentée (34) de l'arbre d'entraînement (35) fait tourner la roue dentée (48). Celle-ci transmet le mouvement d'entraînement au crabot (68) lorsque ses dents (72) sont en prise avec les dents (71) dudit crabot (voir figure 5). Ce dernier entraîne alors l'arbre moteur (32) qui assure la rotation du rotor (2) à travers les roues dentées cylindriques (31 et 30). Dans cette position de travail les parties latérales (66 et 67) du dispositif de protection (62) sont sensiblement horizontales. Les rampes (79 et 80) des tringles (81 et 82) n'exercent pas de poussée sur la tige (70) de sorte que le crabot (68) soit en position basse et que les dents (71 et 72) soient maintenues en contact par la pression du ressort (76).

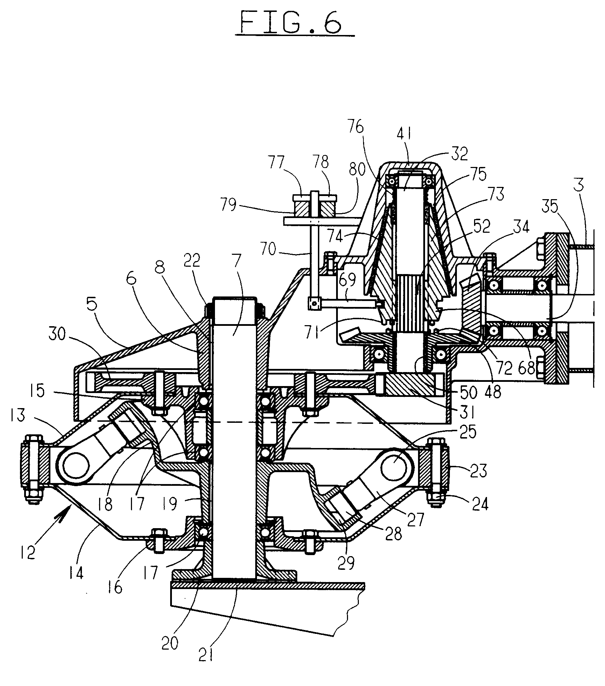

Lorsque l'une quelconque des parties latérales (66 ou 67) du dispositif de protection (62) est repliée vers le haut par rapport à la partie centrale (65), par exemple pour permettre l'accès au rotor (2) ou pour la mise en position de transport, la tringle (81 ou 82) correspondante est déplacée vers le milieu du rotor (2). Sa rampe (79 ou 80) pousse alors sur la saillie (77 ou 78) de la tige (70) et déplace cette dernière ainsi que la fourche (69) et le crabot (68) vers le haut dans la position représentée sur la figure 6. Dans cette position, les dents (71) du crabot (68) n'engrènent plus avec les dents (72) de la roue dentée (48). La transmission du mouvement d'entraînement entre cette roue dentée (48) et le crabot (68) est ainsi interrompue. De plus, la partie conique (73) du crabot (68) est poussée dans le logement (75) de sorte que la garniture (74) frotte contre ses parois. Ce frottement freine la rotation de l'arbre moteur (32) et du rotor (2) en vue d'obtenir rapidement un arrêt total. Ledit rotor (2) ne peut alors plus être mis en rotation, ce qui permet à l'utilisateur de s'en approcher sans aucun risque.

Inversement, lorsque les parties latérales (66 et 67) du dispositif de protection (62) sont ramenées dans la position horizontale pour le travail, les rampes (79 et 80) de leurs tringles (81 et 82) libèrent la tige (70). Le ressort (76) pousse alors le crabot (68) vers la roue dentée (48) jusqu'à ce que leurs dents (71 et 72) engrènent à nouveau et assurent la transmission du mouvement d'entraînement.

Dans les exemples selon les figures 7 et 8, l'entraînement en rotation du rotor (2) durant le travail est assuré par le moteur hydraulique (60). Celui-ci est alimenté depuis le tracteur. Il fait tourner l'arbre moteur (32) qui entraîne le rotor (2) par l'intermédiaire des roues dentées cylindriques (31 et 30).

Il est bien évident que l'invention n'est pas limitée aux exemples de réalisation décrits et représentés sur les dessins annexés. Elle concerne également des machines avec plusieurs rotors. En sus, des modifications restent possibles, notamment en ce qui concerne la constitution des divers éléments ou par substitution d'équivalents techniques, sans sortir pour autant du domaine de protection tel que défini dans les revendications.

## Revendications

1. Machine de fenaison pour l'andainage de fourrage, comportant a bâti (1) supportant au moins un rotor (2) qui possède un boîtier (12) monté au moyen de roulements (17) sur un ce support (7) sensiblement vertical et immobile en rotation, ledit boîtier (12) portant des bras porte-outils (25) qui peuvent tourner sur eux-mêmes et qui sont commandés au moyen d'une came (18) immobile, ce boîtier (12) étant entraîné en rotation durant le travail autour de l'axe support (7), caractérisée par le fait que le boîtier (12) comporte en vue de son entraînement une roue dentée cylindrique (30) qui est fixée sur un moyeu (15) du boîtier (12) et qui se situe sous un carter (5) solidaire du bâti (1), laquelle roue dentée cylindrique (30) engrène avec une seconde roue dentée cylindrique (31) qui est disposée sur un arbre moteur (32) sensiblement parallèle à l'axe support (7) du boîtier (12).

2. Machine selon la revendication 1, caractérisée par le fait que l'arbre moteur (32) comporte en sus au moins une roue dentée conique (33, 48, 49) qui engrène avec une seconde roue dentée conique (34) disposée sur un arbre d'entraînement (35) sensiblement horizontal.

3. Machine selon la revendication 2, caractérisée par le fait que la position de la roue dentée conique (33) peut être inversée sur l'arbre moteur (32) par rapport à la seconde roue dentée conique (34), en vue d'une inversion du sens de rotation du boîtier (12).

4. Machine selon la revendication 1 ou 2, caractérisée par le fait que deux roues dentées coniques (48 et 49) qui engrènent avec la seconde roue dentée conique (34) sont montées libres en rotation sur l'arbre moteur (32) et qu'un crabot (51) qui est lié en rotation audit arbre moteur (32) peut être déplacé axialement sur celui-ci et peut engréner avec l'une ou l'autre de ces deux roues dentées coniques (48 et 49).

5. Machine selon la revendication 4, caractérisée par le fait que le crabot (51) est déplaçable axialement sur l'arbre moteur (32) au moyen d'une tige (59).

6. Machine selon la revendication 1 ou 2, caractérisée par le fait qu'une roue dentée conique (48) est montée libre en rotation sur l'arbre moteur (32), qu'un crabot (68) est lié en rotation audit arbre moteur (32) au moyen de cannelures (52) sur lesquelles il peut être déplacé longitudinalement et que ce crabot (68) comporte sur son flanc dirigé vers ladite roue dentée (48) des dents (71) pouvant engrener avec des dents (72) prévues sur cette roue dentée (48).

7. Machine selon la revendication 6, caractérisée par le fait qu'elle comporte des moyens (68, 73, 74) pour interrompre l'entraînement du rotor (2) et/ou freiner sa rotation.

8. Machine selon la revendication 7, caractérisée par le fait que le crabot (68) comporte une partie conique (73) avec une garniture (74) pour le freinage.

9. Machine selon la revendication 8, caractérisée par le fait que la partie conique (73) se situe dans un logement (75) de même forme prévu dans un couvercle (41) du carter (5).

10. Machine selon la revendication 6, caractérisée par le fait qu'elle comporte un ressort (76) qui pousse le crabot (68) en direction de la roue dentée (48) qui est montée libre en rotation sur l'arbre moteur (32).

11. Machine selon l'une quelconque des revendications 6 à 10, caractérisée par le fait qu'elle comporte des moyens (68, 69, 70, 77 à 82) pour interrompre l'entraînement en rotation du rotor (2) à partir d'un dispositif de protection (62).

12. Machine selon la revendication 11, caractérisée par le fait qu'elle comporte une fourche (69) et une tige (70) pour déplacer le crabot (68) longitudinalement sur l'arbre moteur (32), laquelle tige (70) s'étend hors du carter (5) et est actionnée au moyen de tringles (81 et 82) qui sont reliées à des parties latérales repliables (66 et 67) d'un dispositif de protection (62).

13. Machine selon la revendication 12, caractérisée par le fait que la tige (70) comporte des saillies latérales (77 et 78) qui se situent au-dessus de rampes (79 et 80) des tringles (81 et 82).

14. Machine selon l'une quelconque des revendications précédentes, caractérisée par le fait que l'arbre d'entraînement (35), l'arbre moteur (32) et les roues dentées (33, 34, 48, 49) sont liés au carter (5).

15. Machine selon l'une quelconque des revendications précédentes, caractérisée par le fait que le carter (5) comporte une cavité (46) dans laquelle se situent l'arbre moteur (32) et les roues dentées coniques (33, 34, 48, 49).

16. Machine selon la revendication 15, caractérisée par le fait que un des côtés de la cavité (46) du carter (5) est fermé au moyen d'un couvercle (41) démontable.

17. Machine selon la revendication 14, caractérisée par le fait que l'arbre moteur (32) est guidé au moyen de roulements à billes (39 et 44) logés dans un palier (45) du carter (5) et un alésage (40) du couvercle (41).

18. Machine selon l'une quelconque des revendications 1 à 14, caractérisée par le fait que l'arbre moteur (32) et les roues dentées (33, 34, 48, 49) se situent dans un carter indépendant.

19. Machine selon la revendication 18, caractérisée par le fait que le carter indépendant est fixé sur le carter (5) du bâti (1).

20. Machine selon l'une quelconque des revendications précédentes, caractérisée par le fait que le rapport entre le nombre de dents de la roue dentée conique (34) de l'arbre d'entraînement (35) et le nombre de dents de la ou des roues dentées coniques (33, 48, 49) de l'arbre moteur (32) est tel que la vitesse de rotation de ce dernier soit inférieure à celle de l'arbre d'entraînement (35).

21. Machine selon la revendication 20, caractérisée par le fait que le rapport entre le nombre de dents de la roue dentée cylindrique (31) de l'arbre moteur (32) et le nombre de dents de la roue dentée cylindrique (30) du boîtier (12) est tel que la vitesse de rotation de ce boîtier (12) soit inférieure à celle de l'arbre moteur (32).

22. Machine selon la revendication 1, caractérisée par le fait que l'arbre moteur (32) est lié à un moteur d'entraînement (60).

23. Machine selon la revendication 22, caractérisée par le fait que le moteur (60) est un moteur hydraulique qui est relié au circuit hydraulique d'un tracteur.

24. Machine selon la revendication 23, caractérisée par le fait que le moteur hydraulique (60) est fixé sur le carter (5) et se situe entre l'axe support (7) du rotor (2) et la poutre (3) du bâti (1).

25. Machine selon la revendication 23, caractérisée par le fait que le moteur hydraulique (60) est fixé au carter (5) et se situe à l'arrière de l'axe support (7) du rotor (2) (vu dans la direction d'avancement (A)).

26. Machine selon la revendication 22, caractérisée par le fait que le moteur (60) est un moteur électrique.

## Claims

1. Haymaking machine for windrowing fodder, comprising a frame (1) supporting at least one rotor (2) which has a casing (12) mounted by means of bearings (17) on an approximately vertical support axis (7) which is unable to rotate, the said casing (12) bearing tool-carrying arms (25) which can rotate on themselves and are operated by means of a stationary cam (18), this casing (12) being driven in rotation during work about the support axis (7), ***characterized in*** that the casing (12) comprises, for driving it, a cylindrical gear wheel (30) which is fixed on a hub (15) of the casing (12) and which lies under a box (5) secured to the frame (1), which cylindrical gear wheel (30) meshes with a second cylindrical gear wheel (31) which is arranged on a drive shaft (32) approximately parallel to the support axis (7) of the casing (12).

2. Machine according to Claim 1, ***characterized in*** that the drive shaft (32) additionally comprises at least one bevel gear wheel (33, 48, 49) which meshes with a second bevel gear wheel (34) arranged on an approximately horizontal driving shaft (35).

3. Machine according to Claim 2, ***characterized in*** that the position of the bevel gear wheel (33) can be reversed on the drive shaft (32) with respect to the second bevel gear wheel (34) with a view to reversing the direction of rotation of the casing (12).

4. Machine according to Claim 1 or 2, ***characterized in*** that two bevel gear wheels (48 and 49) which mesh with the second bevel gear wheel (34) are mounted to rotate freely on the drive shaft (32) and that a dog coupling (51) which is connected in terms of rotation to the said drive shaft (32) can be moved axially along this shaft and can mesh with one or other of these two bevel gear wheels (48 and 49).

5. Machine according to Claim 4, ***characterized in*** that the dog coupling (51) can be moved axially along the drive shaft (32) by means of a rod (59).

6. Machine according to Claim 1 or 2, ***characterized in*** that a bevel gear wheel (48) is mounted to rotate freely on the drive shaft (32), that a dog coupling (68) is connected in terms of rotation to the said drive shaft (32) by means of grooves (52) over which it can be moved longitudinally and that this dog coupling (68) comprises, on its flank facing towards the said gear wheel (48), teeth (71) which can mesh with teeth (72) provided on this gear wheel (48).

7. Machine according to Claim 6, ***characterized in*** that it comprises means (68, 73, 74) for interrupting the driving of the rotor (2) and/or braking its rotation.

8. Machine according to Claim 7, ***characterized in*** that the dog coupling (68) comprises a tapered part (73) with fittings (74) for braking.

9. Machine according to Claim 8, ***characterized in*** that the tapered part (73) lies in a housing (75) of the same shape provided in a cover (41) of the box (5).

10. Machine according to Claim 6, ***characterized in*** that it comprises a spring (76) which pushes the dog coupling (68) towards the gear wheel (48) which is mounted to rotate freely on the drive shaft (32).

11. Machine according to any one of Claims 6 to 10, ***characterized in*** that it comprises means (68, 69, 70, 77 to 82) for interrupting the rotational driving of the rotor (2) from a guard (62).

12. Machine according to Claim 11, ***characterized in*** that it comprises a fork (69) and a rod (70) for moving the dog coupling (68) longitudinally along the drive shaft (32), which rod (70) extends out of the box (5) and is actuated by means of linkages (81 and 82) which are connected to folding lateral parts (66 and 67) of a guard (62).

13. Machine according to Claim 12, ***characterized in*** that the rod (70) comprises lateral projections (77 and 78) which are situated above ramps (79 and 80) of the linkages (81 and 82).

14. Machine according to any one of the preceding claims, ***characterized in*** that the driving shaft (35), the drive shaft (32) and the gear wheels (33, 34, 48, 49) are connected to the box (5).

15. Machine according to any one of the preceding claims, ***characterized in*** that the box (5) comprises a cavity (46) in which the drive shaft (32) and the bevel gear wheels (33, 34, 48, 49) lie.

16. Machine according to Claim 15, ***characterized in*** that one of the sides of the cavity (46) of the box (5) is closed by means of a removable cover (41).

17. Machine according to Claim 14, ***characterized in*** that the drive shaft (32) is guided by ball bearings (39 and 44) housed in a bearing (45) of the box (5) and a bore (40) of the cover (41).

18. Machine according to any one of Claims 1 to 14, ***characterized in*** that the drive shaft (32) and the gear wheels (33, 34, 48, 49) are housed in an independent box.

19. Machine according to Claim 18, ***characterized in*** that the independent box is fixed to the box (5) of the frame (1).

20. Machine according to any one of the preceding claims, ***characterized in*** that the ratio between the number of teeth on the bevel gear wheel (34) of the driving shaft (35) and the number of teeth on the bevel gear wheel or wheels (33, 48, 49) of the drive shaft (32) is such that the rotational speed of the latter is lower than that of the driving shaft (35).

21. Machine according to Claim 20, ***characterized in*** that the ratio between the number of teeth on the cylindrical gear wheel (31) of the drive shaft (32) and the number of teeth on the cylindrical gear wheel (30) of the casing (12) is such that the rotational speed of this casing (12) is lower than that of the drive shaft (32).

22. Machine according to Claim 1, ***characterized in*** that the drive shaft (32) is connected to a driving motor (60).

23. Machine according to Claim 22, ***characterized in*** that the motor (60) is a hydraulic motor which is connected to the hydraulic circuit of a tractor.

24. Machine according to Claim 23, ***characterized in*** that the hydraulic motor (60) is fixed to the box (5) and lies between the support axis (7) of the rotor (2) and the beam (3) of the frame (1).

25. Machine according to Claim 23, ***characterized in*** that the hydraulic motor (60) is fixed to the box (5) and lies behind the support axis (7) of the rotor (2) (when viewed in the direction of forward travel (A)).

26. Machine according to Claim 22, ***characterized in*** that the motor (60) is an electric motor.

## Patentansprüche

1. Heuwerbungsmaschine zum Schwaden von Halmgut, mit einem Rahmen (1), der mindestens einen Rotor (2) trägt, welcher ein mittels Wälzlagern (17) auf einer im wesentlichen vertikalen und nicht drehbaren Tragachse (7) angebrachtes Gehäuse (12) aufweist, wobei das Gehäuse (12) Werkzeuge tragende Arme (25) aufweist, die sich um sich selbst drehen können und die mittels einer feststehenden Kurve (18) gesteuert werden, wobei dieses Gehäuse (12) im Betrieb um die Tragachse (7) herum drehangetrieben wird, ***dadurch gekennzeichnet,*** daß das Gehäuse (12) im Hinblick auf seinen Antrieb ein Zylinderrad (30) aufweist, das an einer Nabe (15) des Gehäuses (12) befestigt ist und sich unter einem fest mit dem Rahmen (1) verbundenen Getriebekasten (5) befindet, wobei das Zylinderrad (30) mit einem zweiten Zylinderrad (31) in Eingriff steht, welches auf einer im wesentlichen parallel zur Tragachse (7) des Gehäuses (12) verlaufenden Triebwelle (32) angeordnet ist.

2. Maschine nach Anspruch 1, ***dadurch gekennzeichnet,*** daß die Triebwelle (32) des weiteren mindestens ein Kegelrad (33, 48, 49) aufweist, das mit einem auf einer im wesentlichen horizontalen Antriebswelle (35) angeordneten zweiten Kegelrad (34) in Eingriff steht.

3. Maschine nach Anspruch 2, ***dadurch gekennzeichnet,*** daß die Position des Kegelrads (33) bezüglich des zweiten Kegelrads (34) im Hinblick auf eine Umkehrung der Drehrichtung des Gehäuses (12) auf der Triebwelle (32) umgekehrt werden kann.

4. Maschine nach Anspruch 1 oder 2, ***dadurch gekennzeichnet,*** daß die beiden Kegelräder (48 und 49), die mit dem zweiten Kegelrad (34) in Eingriff stehen, frei drehbar auf der Triebwelle (32) angebracht sind und daß eine Klauenkupplung (51), die drehfest mit der Triebwelle (32) verbunden ist, axial auf dieser verschoben werden und in das eine oder das andere dieser beiden Kegelräder (48 und 49) eingreifen kann.

5. Maschine nach Anspruch 4, ***dadurch gekennzeichnet,*** daß die Klauenkupplung (51) mittels einer Stange (59) axial auf der Triebwelle (32) verschiebbar ist.

6. Maschine nach Anspruch 1 oder 2, ***dadurch gekennzeichnet,*** daß ein Kegelrad (48) frei drehbar auf der Triebwelle (32) angebracht ist, dar eine Klauenkupplung (68) mittels Rillen (52), auf denen sie in Längsrichtung verschoben werden kann, drehfest mit der Triebwelle (32) verbunden ist, und daß diese Klauenkupplung (68) an ihrer zum Zahnrad (48) hin gerichteten Flanke Zähne (71) aufweist, die in an diesem Zahnrad (48) vorgesehene Zähne (72) eingreifen können.

7. Maschine nach Anspruch 6, ***dadurch gekennzeichnet,*** daß sie Mittel (68, 73, 74) zum Unterbrechen des Antriebs des Rotors (2) und/oder zum Bremsen seiner Drehung aufweist.

8. Maschine nach Anspruch 7, ***dadurch gekennzeichnet,*** daß die Klauenkupplung (68) einen konischen Teil (73) mit einem Belag (74) für das Bremsen aufweist.

9. Maschine nach Anspruch 8, ***dadurch gekennzeichnet,*** daß sich der konische Teil (73) in einer in einem Deckel (41) des Getriebekastens (5) vorgesehenen Aufnahme (75) gleicher Form befindet.

10. Maschine nach Anspruch 6, ***dadurch gekennzeichnet,*** daß sie eine Feder (76) aufweist, die die Klauenkupplung (68) in Richtung des frei drehbar auf der Triebwelle (32) angebrachten Zahnrads (48) drückt.

11. Maschine nach einem der Ansprüche 6 bis 10, ***dadurch gekennzeichnet,*** daß sie Mittel (68, 69, 70, 77 bis 82) zum Unterbrechen des Drehantriebs des Rotors (2) von einer Schutzvorrichtung (62) aus aufweist.

12. Maschine nach Anspruch 11, ***dadurch gekennzeichnet,*** daß sie eine Gabel (69) und eine Stange (70) zum Verschieben der Klauenkupplung (68) in Längsrichtung auf der Triebwelle (32) aufweist, wobei sich die Stange (70) aus dem Getriebekasten (5) heraus erstreckt und mittels Gestängegliedern (81 und 82) betätigt wird, die mit klappbaren Seitenteilen (66 und 67) einer Schutzvorrichtung (62) verbunden sind.

13. Maschine nach Anspruch 12, ***dadurch gekennzeichnet,*** daß die Stange (70) seitliche Vorsprünge (77 und 78) aufweist, die sich über Rampen (79 und 80) der Gestängeglieder (81 und 82) befinden.

14. Maschine nach einem der vorhergehenden Ansprüche, ***dadurch gekennzeichnet,*** daß die Antriebswelle (35), die Triebwelle (32) und die Zahnräder (33, 34, 48, 49) mit dem Getriebekasten (5) verbunden sind.

15. Maschine nach einem der vorhergehenden Ansprüche, ***dadurch gekennzeichnet,*** daß der Getriebekasten (5) einen Hohlraum (46) aufweist, in dem sich die Triebwelle (32) und die Kegelräder (33, 34, 48, 49) befinden.

16. Maschine nach Anspruch 15, ***dadurch gekennzeichnet,*** daß eine der Seiten des Hohlraums (46) des Getriebekastens (5) mittels eines abnehmbaren Deckels (41) geschlossen ist.

17. Maschine nach Anspruch 14, ***dadurch gekennzeichnet,*** daß die Triebwelle (32) mittels Kugellagern (39 und 44), die in einem Lager (45) des Getriebekastens (5) und einer Bohrung (40) des Deckels (41) untergebracht sind, geführt wird.

18. Maschine nach einem der Ansprüche 1 bis 14, ***dadurch gekennzeichnet,*** daß sich die Triebwelle (32) und die Zahnräder (33, 34, 48, 49) in einem unabhängigen Getriebekasten befinden.

19. Maschine nach Anspruch 18, ***dadurch gekennzeichnet,*** daß der unabhängige Getriebekasten an dem Getriebekasten (5) des Rahmens (1) befestigt ist.

20. Maschine nach einem der vorhergehenden Ansprüche, ***dadurch gekennzeichnet,*** daß die Beziehung zwischen der Zähnezahl des Kegelrads (34) der Antriebswelle (35) und der Zähnezahl des Kegelrads oder der Kegelräder (33, 48, 49) der Triebwelle (32) derart ist, daß die Drehzahl der letzteren kleiner ist als die der Antriebswelle (35).

21. Maschine nach Anspruch 20, ***dadurch gekennzeichnet,*** daß die Beziehung zwischen der Zähnezahl des Zylinderrads (31) der Triebwelle (32) und der Zähnezahl des Zylinderrads (30) des Gehäuses (12) derart ist, daß die Drehzahl dieses Gehäuses (12) kleiner ist als die der Triebwelle (32).

22. Maschine nach Anspruch 1, ***dadurch gekennzeichnet,*** daß die Triebwelle (32) mit einem Antriebsmotor (60) verbunden ist.

23. Maschine nach Anspruch 22, ***dadurch gekennzeichnet,*** daß es sich bei dem Motor (60) um einen Hydraulikmotor handelt, der mit dem Hydraulikkreis eines Traktors verbunden ist.

24. Maschine nach Anspruch 23, ***dadurch gekennzeichnet,*** daß der Hydraulikmotor (60) an dem Getriebekasten (5) befestigt ist und sich zwischen der Tragachse (7) des Rotors (2) und dem Träger (3) des Rahmens (1) befindet.

25. Maschine nach Anspruch 23, ***dadurch gekennzeichnet,*** daß der Hydraulikmotor (60) an dem Getriebekasten (5) befestigt ist und sich rückwärtig der Tragachse (7) des Rotors (2) (in Fahrtrichtung (A) gesehen) befindet.

26. Maschine nach Anspruch 22, ***dadurch gekennzeichnet,*** daß es sich bei dem Motor (60) um einen Elektromotor handelt.
